# EUROPEAN PATENT SPECIFICATION

(11) **EP 0 347 499 B1**
(45) Date of publication and mention of the grant of the patent: **28.04.1993**
(21) Application number: 88305682.2
(22) Date of filing: 22.06.1988
(51) Int. Cl.: B29C 47/00

(54) **Method and apparatus for an oscillating pinch roll assembly utilized in the extrusion of blown film**
Verfahren zur Herstellung einer oszillierenden Andruckwalze, die für die Verdrängung im Blasverfahren hergestellter Kunststoff-Schlauchfolien benutzt wird
Méthode à assembler un cylindre oscillant à pincement utilisé à boudiner une pellicule soufflée

(43) Date of publication of application: 27.12.1989
(73) Proprietor: REMVER S.A. (a Corp. of Panama), Santiago (CL)
(72) Inventor: SCHELE Enrique, SANTIAGO (CL)
(74) Representative: Calderbank, Thomas Roger

(56) References cited:
- EP-A- 0 252 671
- DE-A- 2 800 262
- DE-A- 3 100 520
- FR-A- 1 553 853

## Description

The present invention relates to a web handling apparatus and particularly relates to an oscillating pinch roll assembly utilized in conjunction with the extrusion of blown plastic films.

In the production of plastic films, the roll formation or the characteristic shape of a cylindrical roll of the film is a very important characteristic indicative of the overall quality of the film. This is especially true with soft and light gauge films that are commercially sold in a roll form.

A perfect or near perfect cylindrically shaped roll is a mandatory requirement for many plastic film applications and uses. A perfect cylindrically shaped roll implies a perfect uniform gauge across the plastic film or web. This uniform gauge is very difficult to obtain in films made by a casting or made by calendering process. In the extrusion of plastic films, it is virtually impossible to obtain a uniform film gauge that will, in turn, produce a uniform, cylindrical roll. This is especially true due to the nature of the gauge variations in the web (i.e., the film) which are very localized in the cross machine direction. In other words, one can identify narrow sections in the thickness or gauge of the film approaching or exceeding the high gauge tolerance as well as web sections approaching or exceeding the low gauge tolerances of the film. In commercially sized, cylindrical rolls that normally include thousands of layers of film, these high and low gauge sections add up algebraically thereby deforming the outer contour of the cylindrical roll; hence, "high bands" and "valleys" are readily identified in the roll. This condition affects the flatness of the web when the film is unrolled.

The introduction of extrusion blown films, where a thin wall tubing is formed by extension, improved the production of cylindrical rolls of film having "good" profiles, that is perfect or nearly perfect cylindrical shapes, without "bands" and "valleys". Production of these good profile rolls was possible by distributing the gauge tolerances literally across the roll or laterally distributing the imperfection along a longitudinal run of the web.

In this process of extruding blown films, most of the gauge variations originate between the extruder die and the "frostline", which is an area approximately located near where the plastic bubble becomes cylindrical. In general, plastic is extruded through a generally circular die and an area of high air pressure is maintained in the "bubble" of plastic. The plastic is drawn up from the extruder by a pinch roller mechanism and the air pressure in the bubble is maintained constant. The extruded bubble of plastic is formed into a tubular web and the tubular web is drawn between two pinch rolls to obtain the double walled, lay flat.

After the tubular web or tip of the bubble is collapsed and flattened, the resulting double walled web can be wound as a "lay flat", can be slit on both edges and wound on two rolls each carrying a single layer of film, or can be slit at one point and then opened to obtain one single layer roll having a width double that of the lay flat.

In a simple extrusion blown film assembly, any particular longitudinal line of the plastic bubble remains in the same lateral location of the finished roll of film as it was in the original tubular web. This longitudinal imperfection or defect produces a bad or uneven cylindrical roll due to the cumulative effect of this gauge variation.

By rotating the pinch rolls in a plane normal to the center line of the bubble (or tubular web) and about an axis that is conjointly the center line of the tubular web, the constant, longitudinal, imperfect gauge variation line in the bubble will change its relative position across the lateral width of the roll of film. If the pinch rolls are rotated slowly and at a uniform rather through a 360 degree angle, each and every line or imperfection in the bubble traverses the full lateral width of the web. This produces as even distribution of any imperfections in the film gauge across the web. For simplicity of power transmission, by reversing the rotation of the pinch rolls and counter rotating them 360 degrees in the opposite direction, in the same slow and uniform rate, the imperfections are further laterally distributed over the longitudinal run of the web. Therefore, by introducing an oscillatory rotation of the pinch rollers with respect to the bubble center line, any imperfections can be laterally distributed along the width of the cylindrical roll. Hence, a perfect cylindrical roll film is wound regardless of the gauge variations in the tubular web. The same result can be obtained by rotating the bubble and keeping the pinch rollers stationary.

From the early stages of development of this blown film extrusion process, this technique of rotating the pinch rollers with respect to the center line of the bubble, has been applied in many different ways to obtain the lateral distribution of film gauge variations over a longitudinal run of the film. For example, the winder and the pinch rolls have been oscillated about the bubble center line when the extruder is stationary, with the winder or the extruder on the vertically upper top of the extrusion apparatus. Another method is to rotate the extruder about the extrusion or bubble center line while keeping the pinch rollers and winder stationary. Vertical extruders mounted on a rotating base were developed to save floor space in the manufacturing facility. Also, rotational dies have been widely used to generate a rotation between the pinch rollers and the tubular web.

Most recently, wider films have been required by industry which in turn dictate the use of larger equipment. Further, with the introduction of co-extrusion processes that use more than one extruder and the need to extrude polymers having poor heat stability, it is more and more difficult to use the conventional methods of rotating the extruder or rotating the winder with pinch rolls attached, or otherwise rotating the die and the air ring in order to obtain a good or nearly perfect cylindrically finished roll.

One device was developed in which a stationary extruder, die and winder were used with only the pinch rollers being oscillated about the bubble center line. An idler roller was mounted with the pinch rollers parallel to the pinch rollers and positioned outwardly and slightly higher than the pinch rollers. A turn bar was horizontally located near and rotatable about the extrusion or bubble center line. This turn bar oscillated at one-half the angular speed of the pinch rolls. The trajectory of the lay flat over this idler roll and turn bar made a 180 degree turn. As a result, the output path of the web was stabilized by fixing it over one stationary idler roller and bringing the web down from the tower (upon which was located the pinch rollers and web handler) to the stationary winder. The oscillation of the pinch rollers was 180 degrees and this technique produced good results with a reasonable good gauge control.

This principle was used in a double version with tow idler rollers and two turn burns in U.S. Patent No. 3,768,949 such that the oscillation could be extended through a 360 degree angle.

Another patent, U.S. Patent No. 3,657,974 by Hedrich, et al., discloses the use of a pinch roller mechanism having a turn bar coplanarly turning the flattened web and two deflecting rollers at one axial end of the turn bar. The axis of rotation of this pair of deflecting rollers is parallel to the center axis of the tubular web. A third withholding roller, having an axis of rotation parallel to the tubular web center axis, is disposed at the other axial end of the turn bar. The flattened and turned web runs between the first pair of deflecting rollers, over one roller of that pair of deflecting rollers and to a fixed deflecting roller. The pinch rollers, turning bar and three deflecting rollers are rotated 360 degrees such that the web still passes between the pair of deflecting rollers, but then passes over the pair of deflecting rollers and is spaced from the turn bar by the third deflecting roller at the other axial end of the turning bar. The unsupported distance transversed by the web is significant, i.e., the distance between the pair of deflecting rollers and the stationary idler roller. Further, if the oscillatory motion is at a constant speed, change in the speed of the web will not be constant because of the straight line distance between the pair of deflecting rollers and the fixed roller varies disproportionately as compared to the oscillatory speed.

FR-A-1553853 discloses an apparatus for the extrusion of tubes or films of plastics material. In FR-A-1553853, a plurality of rollers are mounted on a rotatable platform with their axes parallel to the axis of rotation of the platform so that a web, having passed through pinch rollers and a turning bar, passes around one and periodically others of the rollers, as the platform rotates.

The present invention seeks to provide a web handling apparatus which always feeds the travelling web to a fixed idler roller.

According to the present invention there is provided a web handling apparatus for flattening and laterally distributing any longitudinal imperfections in a moving continuous, flexible, tubular web comprising:
a rotatable spindle having an input accepting said tubular web, said tubular web having said longitudinal imperfections at a constant circumerential position, and outputting a flattened web with said imperfections laterally distributed to a fixed idler roller, said spindle including:
a pinch roller means for flattening said tubular web disposed at the input of said spindle;
a turning bar means mounted coplanar with said flattened web as said web exits said pinch roller means, said turning bar means for coplanarly turning said web substantially 90 degrees;
a plurality of rollers circumferentially disposed about said turning bar means having axes of rotation substantially parallel to the axis of rotation of said spindle and substantially laterally aligned with said flattened web, said flattened web always traveling first over a first roller of said plurality of rollers and periodically traveling over other rollers of said plurality of rollers along an outer periphery of said spindle, that is defined by a plurality of idler rollers, to said fixed idler roller; and
means for rotating said spindle through a predetermined angle of 360 degrees about an axis of said tubular web such that a relative position of said imperfection with respect to a defined position on said turning bar eans changes thereby laterally distributing said imperfection along a longitudinal run of said flattened web;
wherein said tubular web is vertically pulled into said spindle via pinch roller means, said spindle and the axis of said plurality of rollers are vertically disposed, said spindle includes two end support structures that rotationally support said plurality of rollers, one end support structure having said pinch roller means mounted thereto and said turning bar means mounted thereto, means for askewing the axis of rotation of said plurality of rollers by rotating said one end support structure with respect to the other end support structure such that said flattened web moving over said plurality of rollers is caused to move upward due to the askewed axis of rotation of said plurality of rollers to counteract any sag in the horizontally moving flattened web.

In the present invention the horizontally travelling web may be wound and unwound around the spindle thereby periodically causing the web to travel over the rollers.

The present invention also aims to correct for the sag of the vertically positioned and horizontally travelling web by askewing the rotational axis of the rollers along the periphery of a spindle mechanism.

It is an additional object of the present invention to automatically correct for the sag in the horizontally travelling web with a sag control and an askewing control for the rollers.

In one embodiment, the oscillating pinch roll assembly or web handling apparatus includes a rotatable spindle having an input which accepts the tubular web from the extruder. A pinch roller is mounted at the input of the spindle which pulls the web into the spindle. A plurality of rollers are circumferentially disposed around the pinch roller and the axis of rotation of those rollers is parallel to the center line of the tubular web. A turning bar is disposed in the interior of the spindle and turns the flattened web exiting the pinch rollers 90 degrees and feeds the horizontal traveling web to a first roller of the plurality of rollers disposed at the periphery of the spindle. The traveling web always passes over this first roller. By rotating the spindle in an oscillatory manner about the center axis of the tubular web, the horizontally traveling, flat web is wound and unwound around the outer periphery of the spindle and is fed continuously to a fixed position that is occupied by an idler roller.

Means is provided for askewing the plurality of rollers such that their axis of rotation is not perfectly parallel to the center line of the tubular web. The axis rotation of the rollers is changed such that an upward force is imparted to the web traveling over the rollers and hence any sag between rollers is compensated for.

Further objects and advantages of the present invention can be found in the detailed description which follows when taken in conjunction with the accompanying drawings in which:
Figure 1 illustrates, in schematic form, the web handling apparatus in accordance with the principles of the present invention.
Figures 2A through 2F schematically illustrate the various rotational positions of the spindle in accordance with the principles of the present invention, i.e., showing the winding and unwinding aspect of the invention;
Figure 3 shows a partial schematic view of the web travelling over a roller wherein the axis of rotation of the roller is askewed from a line that is parallel to the center line of the tubular web;
Figure 4 is a partial schematic of the automatic askew control that askews the rollers;
Figure 5 shows an embodiment of an oscillatory drive mechanism;
Figure 6 illustrates a plan view showing placement of the askew control and the oscillatory drive; and,
Figure 7 illustrates a top, plan view of the upper support structures.

The present invention relates to an oscillating pinch roll assembly utilized in conjunction with the extrusion of blown films and a method of handling the tubular web obtained from that extrusion process.

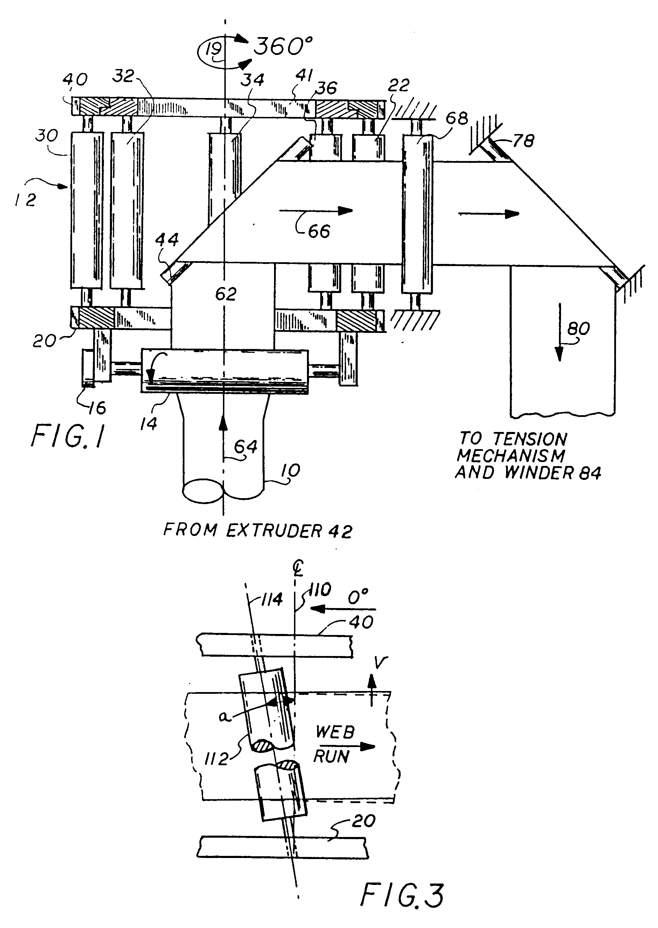

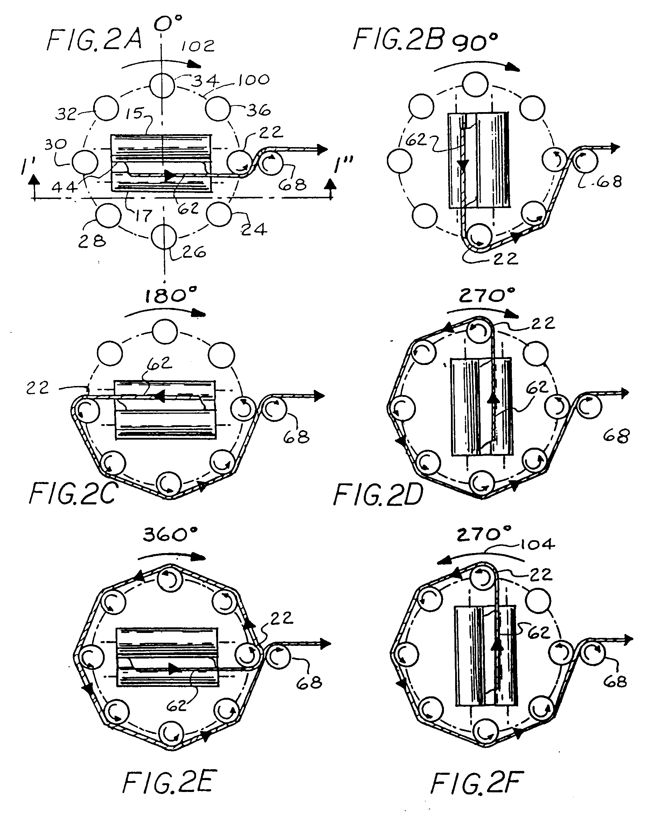

Figure 1 is a schematic side view of the apparatus generally from the perspective section line 1′-′˝ in Figure 2A. Tubular web 10 is pulled into a rotatable spindle structure 12 by pinch rollers 14. The pinch rollers are comprised of rollers 15 and 17 best illustrated in Figure 2A. These pinch rollers are driven by motor 16 which is also mounted on spindle 12. The axis of rotation of rollers 15 and 17 is normal to the center line of tubular web 10, that center line shown as imaginary line 19 in Figure 1.

spindle 12 is generally defined by lower circular support structure 20, a plurality of rollers 22, 24, 26, 28, 30, 32, 34 and 36 upper circular support structure 40 that mates with the peripheral edge of circular support structure 41. Support structures 20, 40 and 41 are rotatably mounted by an appropriate means to a frame or other structure which, in this embodiment, is vertically atop a bubble extruder 42. For a general description of such a bubble extruder, reference is made herein to U.S. Patent No. 3,657,974 to Hedrich, et al.

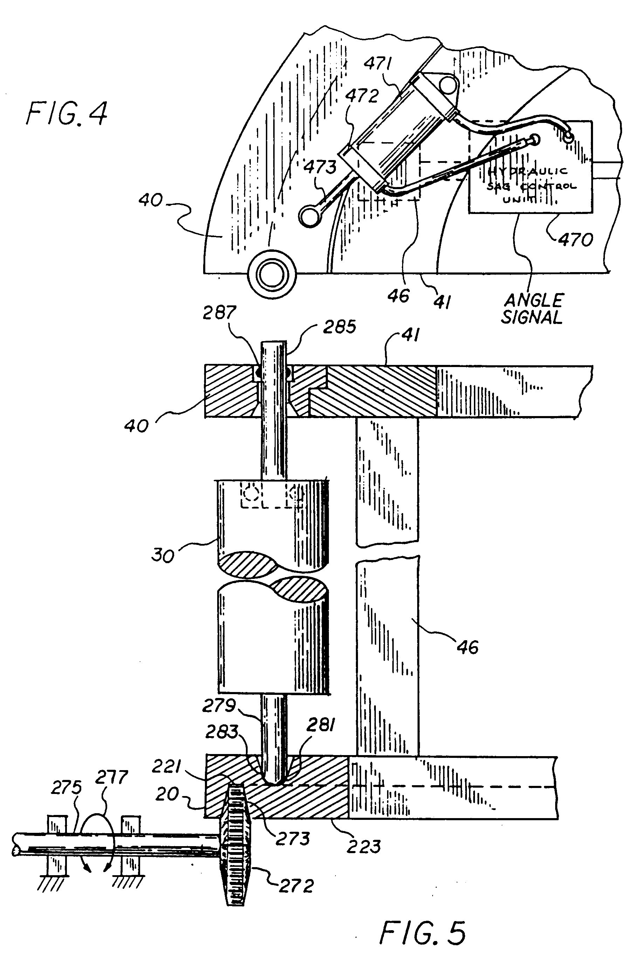

A turning bar 44 is mounted in the interior of spindle 12 and affixed to frame 46. Frame 46 is attached to lower support structure 20 and to the upper, inner support structure 41, in Figure 5.

Turning bar 44 is disposed in the plane of the flattened web 62 (the double walled film or web obtained by flattening tubular web 10 by pinch rollers 14). The bar coplanarly turns flattened web 62 substantially 90 degrees as shown by comparison of arrows 64 and 66. After being turned 90 degrees, in this embodiment to a horizontal position, web 62 travels over roller 22 and then travels over fixed roller 68. Roller 68 is not part of the rotatable spindle 12 since it is attached to the stationary frame structure shown in broken away cross-section in Figure 1.

After leaving stationary roller 68, edge sensor 74 detects the sag of horizontally traveling web and sag control 470 produces a signal which is fed back into askew control mechanism described later with respect to Figure 4.

Figure 5 shows a partial, plan view of a mechanism for imparting oscillatory motion to upper out, upper inner and lower support structures 40, 41 and 20. Lower support structure 20 has a tapered groove 221 downwardly open on its bottom surface 223. A driving wheel 272 has a tapered edge 273 that mates with groove 221. Wheel 272 is connected to shaft 275 that rotates in two directions as shown by double-headed arrow 277. Roller 30 is mounted on roller shaft 279. The lower section 281 of the shaft is held in cavity 283. The upper section 285 is retained by a self-aligning axial bearing 287. Lower support structure 20 is also supported by two idler wheels, not shown, such that all of the wheels (the drive and idler) are 120 degrees apart.

Web 62 traveling in direction 66 then passes over stationary turning bar 78 and is again turned 90 degrees such that is moves downward in direction 80 towards tension mechanism and winder means 84. The tensioning mechanism although not shown could be a dancer roll within the tension mechanism and winder means 84 which is simply the winder upon which the finished cylindrical roll is formed.

The operation of the web handling device is described in conjunction with Figures 2A through 2F along with Figure 1. The extruded film bubble is pulled from extruder 42 by pinch roller 14. Tubular web 10 is flattened and becomes a double walled flattened web 62 which is then turned over turning bar 44. Web 62 then travels over roller 22. Rollers 22, 24, 26, 28, 30, 32 34 and 36 can be driven rollers or idler rollers. The diameter of the circle passing through the axis of rotation of these rollers is slightly larger than the length of the pinch rollers 14. The length of these external rollers that define the outer periphery of spindle 12 is equal to the diameter of the circle. In general, this circle is circle 100 in Figure 2A.

Spindle 12 can be though of as a spool which winds and unwinds flattened web 62 about its outer periphery. Figure 2A shows the 0 degree angular position wherein roller 22 is closely spaced from fixed roller 68. At a minimum, spool 12 must include roller 22 and roller 30 at diametrically opposing positions on the spindle. Spindle 12 slowly rotates clockwise in direction 102 as shown in Figures 2B through 2E. Those figures show sequentially the 90 degree position, 180 degree position, 270 degree position and 360 degree position. It can be seen that pinch rollers 14 and turning bar 44 rotate about center line 19 of tubular web 10. After rotating through the predetermined 360 degree angle shown in Figure 2E, the spindle mechanism is counter rotated as shown in Figure 2f, counter clockwise or in direction 104 and web 62 is unwound from spindle 12.

At all times, web 62 leaves stationary roller 68 at the same position and in the same direction. This direction is immediately to the right of stationary roller 68 as shown in Figures 2A through 2F. The web travels in the same direction. Also, it can be seen that web 62 always travels over the first roller 22 that defines a portion of the periphery of spindle 12 and further periodically travels over all other rollers mounted on the spindle. The rollers always turn in the same direction notwithstanding the winding and unwinding direction of the spindle in general.

The oscillation of the spindle is very slow as compared with the speed of travel of web 62. For example, a speed of 0.04-0.08 RPM is not uncommon for the spindle. Since the distance the flattened web must travel increases and decreases dependent upon the winding or unwinding position of the spindle, the change in web speed is almost constant. Tensioning mechanism 82 is downstream of the web handling apparatus. That tensioning mechanism affects the take-up winder speed or velocity as well as the tension of the web coming off of the spindle and associated structures. Further, the increase and decrease in speed is minimal as compared with the traveling speed of the web.

By increasing number of rollers defining the outer periphery of the spool, the distance the web has to travel between each roller is smaller and also the oscillatory action of the spindle on the web is more uniform. The distance between the rollers is a factor since this distance represents an unsupported length of web.

Since the web is traveling horizontally and in a vertical position, there is a tendency for the web to move downward over the rollers. Two main factors affect this downward movement, the slippage between the surface of the roller and the plastic film or web and the sagging of the web, being in both cases a function of the characteristic of the web itself and the tension applied to it.

The tension on the web is adjustable and an optimum amount is applied for proper operation of the web handling apparatus by tension mechanism 82 identified in Figure 1. Rollers 22, 24, 26, 28, 30, 32, 34, 36 and 68 can be coated with rubber or other elastomer with a high coefficient of friction. In this manner, no slippage occurs between the rollers and the web. If eight rollers are used, the effect of sagging is relatively minor due to the small distance between the rollers. However, the effect of any sagging can be completely eliminated or nullified by tilting or askewing the axis of the rollers from the line parallel to the center line of the tubular web (center line 19 in Figure 1).

Figure 3 details this tilting or askewing. Center line 19 is parallel to the center line of the tubular web. The upper support 40 and lower support structure 20 is shown in the Figure. By rotating upper support 40 a predetermined number of degrees with respect to lower support structure 20, the axis of rotation of roller 112 is changed to center line 114. Specifically, an angle exists between parallel center line 19 and current position center line 114. When the roller is aligned with parallel center line 19, the web travels normal to that axis of rotation as shown by the dash lines in Figure 3. However, when roller 112 has an axially center line 114, the web experiences an upward movement because the web attempts to travel in a line normal to the axis of rotation of that roller. This is shown in the solid lines representing the web in Figure 3. By rotating upper support structure 40 with respect to lower support structure 20, all of the rollers are askewed or tilted in the same degree and any sagging occuring in the horizontally traveling web is eliminated. The sag compensation is proportional about the periphery of the spindle.

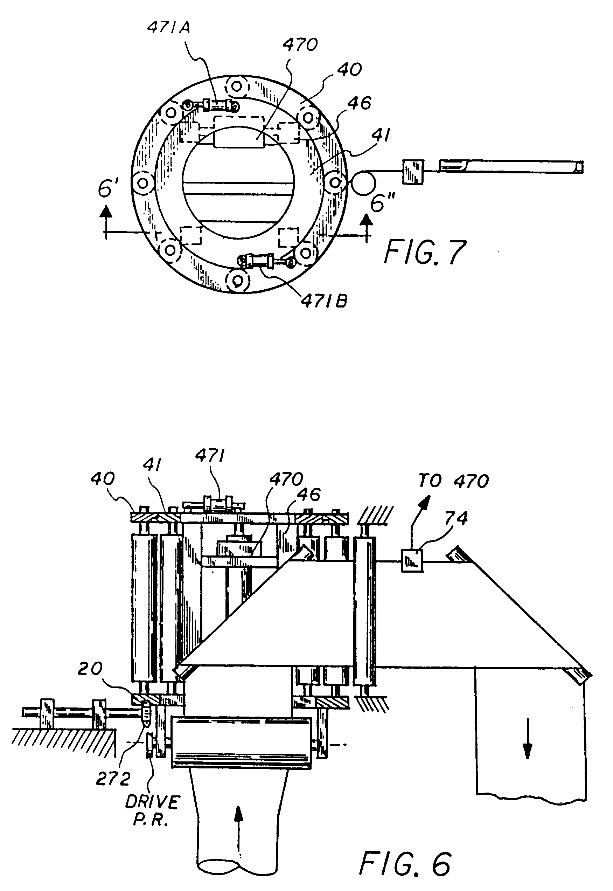

The sagging can be automatically adjusted utilizing edge detector 74 and sag control 470 shown in Figure 6. The sag control produces an angle signal that is applied to a device shown in detail in Figure 4. The sag control signal is applied to hydraulic sag control unit 470. Rod 473 is connected to outer, upper support structure 40 whereas cylinder 471 is connected to inner, upper support structure 41. They hydraulic actuator is a two cylinder device operable in opposing directions, i.e., the cylinders are in series.

Figure 6 shows a plan view of hydraulic cylinder 471 atop support 41 and oscillatory drive wheel 272 below support 20.

Figure 7 shows a top view with cylinders 471A and 471B operable to control the askew of each roller that is shown by dashed lines.

By changing the axis of rotation and askewing that axis from a line parallel to the center line of the tubular web, a proportional correction for the sag is achieved.

Of course, other mechanisms may be employed to achieve the tilting or askewing of the rollers that define the periphery of spindle 12.

The blown film extrusion process is done at a constant speed. The lineal speed of the bubble, surface speed of the pinch rollers and the speed of lay flat traveling through the assembly and over the rollers defining the spindle is constant in relation to the assembly. Once the lay flat contacts stationary or fixed roller 68 and from that point on downstream the web's lineal speed with respect to a fixed point in the extrusion assembly becomes cyclical due to the retardation and acceleration caused by the wrapping and the unwrapping action of the spindle. The variations of the lay flat speed are very small as a percentage of the total speed of the lay flat and this does not cause problems inasmuch as the downstream component units in the film line are driven at a constant tension rather than a constant speed.

The claims appended hereto are meant to cover modifications and changes within the scope of the present invention. For example, the number of rollers defining the outer periphery of the spindle can be changed. The driving mechanisms of the spindle and of the pinch rollers can be altered. The edge sensor, the sag control and askew or tilting control can be modified and can be moved to any particular location that may provide an indication of sag of the horizontally traveling web. Also, the spindle need not be vertically aligned, but must be aligned with the center line of the tubular web. If the tubular web is running horizontally, then the axial center line of the spindle must be horizontal and the flattened web would travel circumferentially about that horizontal axis. In that case, the sag control mechanism may not be necessary.

## Claims

1. A web handling apparatus for flattening and laterally distributing any longitudinal imperfections in a moving continuous, flexible, tubular web comprising:
a rotatable spindle having an input accepting said tubular web, said tubular web having said longitudinal imperfections at a constant circumerential position, and outputting a flattened web with said imperfections laterally distributed to a fixed idler roller, said spindle including:
a pinch roller means for flattening said tubular web disposed at the input of said spindle;
a turning bar means mounted coplanar with said flattened web as said web exits said pinch roller means, said turning bar means for coplanarly turning said web substantially 90 degrees;
a plurality of rollers circumferentially disposed about said turning bar means having axes of rotation substantially parallel to the axis of rotation of said spindle and substantially laterally aligned with said flattened web, said flattened web always traveling first over a first roller of said plurality of rollers and periodically traveling over other rollers of said plurality of rollers along an outer periphery of said spindle, that is defined by a plurality of idler rollers, to said fixed idler roller; and
means for rotating said spindle through a predetermined angle of 360 degrees about an axis of said tubular web such that a relative position of said imperfection with respect to a defined position on said turning bar means changes thereby laterally distributing said imperfection along a longitudinal run of said flattened web;
wherein said tubular web is vertically pulled into said spindle via pinch roller means, said spindle and the axis of said plurality of rollers are vertically disposed, said spindle includes two end support structures that rotationally support said plurality of rollers, one end support structure having said pinch roller means mounted thereto and said turning bar means mounted thereto, means for askewing the axis of rotation of said plurality of rollers by rotating said one end support structure with respect to the other end support structure such that said flattened web moving over said plurality of rollers is caused to move upward due to the askewed axis of rotation of said plurality of rollers to counteract any sag in the horizontally moving flattened web.

2. A web handling apparatus as claim in Claim 1 wherein said means for rotating is an oscillatory rotation means that rotates said spindle through said predetermined angle of up to 360 degrees and then counter rotates aid spindle through said predetermined angle in an opposite rotational direction, thereby periodically causing said flattened web to travel over said other rollers.

3. A web handling apparatus as claimed in Claim 1 or Claim 2 including a pinch roller drive means mounted on said spindle for drawing said tubular web into said spindle.

4. A web handling apparatus as claimed in Claim 1, 2 or 3 wherein said turning bar means is mounted in the interior of said spindle.

5. A web handling apparatus as claimed in Claim 1 including an edge detecting means for monitoring the horizontal position of the horizontally disposed and flattened web and for generating a sag signal when the edge of said horizontal and flattened web is outside a predetermined vertical range, means for controlling the askew of said axis of rotation of said plurality of rollers via said means for askewing such that an upward movement is imparted to said horizontal and flattened web thereby automatically conteracting said sag.

6. A web handling apparatus as claimed in Claim 1 or Claim 2 wherein said plurality of rollers are idler rollers.

7. A web handling appartus as claimed in Claim 1, particularly a take off apparatus for blown plastic tubing, rotatable through 360 degrees and reversible about a tubing center line, comprising a rotating structure including: two pull rolls and a canopy for flattening said tubing, a 45 degree turn bar following said pull rolls on a plane parallel to said rolls and centrally and tangentially located to said center line, multiple and equally spaced rollers surrounding said turn bar and mounted in a circumferential pattern concentric with said center line, said rollers having their axis of rotation mostly parallel to said center line, one of said rollers being located substantially in line with said turn bar; said rotating structure being operated upon by means for imparting an oscillatory rotation to said totating structure about said center line; a stationary roller closely located proximate to the circle of rollers and parallel to said center line.

8. An apparatus according to Claim 7 wherein the flattened tubing is a web and the web after traveling over the turn bar and the exterior of the circle of rollers, is wrapped and unwrapped over said rollers by the oscillatory rotation of the rotating structure in conjunction with the stationary roller.

9. An apparatus according to Claim 8 wherein the wrapping and unwrapping action is characterized by a rotation of the rollers always being in the same direction when said rollers are in contact with said web.

10. An apparatus according to Claim 7, 8, or 9 wherein a minimum of two rollers are utilized that are external and parallel to said center line and are in line with said turn bar.

11. An apparatus according to Claim 7, 8, 9, or 10 which an external circle of said rollers are parallel to said center line and are idler rollers or are driven rollers.

12. An apparatus according to any one of Claims 7 to 11 in which the external circle of rollers parallel to said center line have a coating of rubber or elastomer with a high coefficient of friction.

13. An apparatus according to Claim 12 in which the axis of the external, oscillating rollers is preset at an angle with respect to said center line such that a lifting effect is produced on a said web as said web passes over said rollers thereby nullifying the sagging of said web.

14. An apparatus according to Claim 11 in which the axis of the external, oscillating rollers is adjusted by means for continually and automatically adjusting with respect to said center line while the apparatus is in operation such that said rollers act as an edge guide for said web.

## Patentansprüche

1. Materialhandhabungsvorrichtung zum Ebnen und lateralen Verteilen jeglicher longitudinaler Unvollkommenheiten in einer sich bewegenden, kontinuierlichen, flexiblen, röhrenförmigen Materialbahn, umfassend:
eine drehbare Spindel, die einen Eingang aufweist, der die genannte röhrenförmige Materialbahn aufnimmt, wobei die genannte röhrenförmige Materialbahn die genannten longitudinalen Unvollkommenheiten an einer konstanten Umfangs- bzw. Umkreisposition aufweist, und eine geebnete Materialbahn an eine fixierte Leit- bzw. Leerlaufrolle abgibt, wobei die genannten Unvollkommenheiten lateral verteilt sind, wobei die genannte Spindel einschließt:
ein Absenk- bzw. Druckrollenmittel zum Ebnen der genannten röhrenförmigen Materialbahn, das am Eingang der genannten Spindel vorgesehen ist;
ein Dreh- bzw. Wendestangenmittel, das koplanar mit der genannten geebneten Materialbahn montiert ist, wenn die genannte Materialbahn aus dem genannten Absenkrollenmittel austritt, wobei das genannte Wendestangenmittel die genannte Materialbahn im wesentlichen um 90° koplanar wendet;
eine Vielzahl von im Umkreis um das genannte Wendestangenmittel angeordneten Rollen, die Rotationsachsen aufweisen, die im wesentlichen parallel zur Rotationsachse der genannten Spindel liegen und im wesentlichen lateral mit der genannten geebneten Materialbahn ausgerichtet sind, wobei die genannte geebnete Materialbahn immer zuerst über eine erste Rolle der genannten Vielzahl von Rollen wandert und periodisch über andere Rollen der genannten Vielzahl von Rollen entlang einer äußeren Peripherie der genannten Spindel, die durch eine Vielzahl von Leitrollen begrenzt bzw. definiert ist, zur genannten fixierten Leitrolle wandert; und
Mittel zum Drehen der genannten Spindel um einen vorherbestimmten Winkel von 360° um eine Achse der genannten röhrenförmigen Materialbahn, sodaß eine relative Position der genannten Unvollkommenheit sich bezogen auf eine definierte Position am genannten Wendestangenmittel verändert, wodurch die genannte Unvollkommenheit lateral entlang eines longitudinalen Laufs bzw. einer longitudinalen Bahn der genannten geebneten Materialbahn verteilt wird;
worin die genannte röhrenförmige Materialbahn über Absenkrollenmittel vertikal in die genannte Spindel gezogen wird, die genannte Spindel und die Achse der genannten Vielzahl von Rollen vertikal angeordnet sind, die genannte Spindel zwei Endstützanordnungen einschließt, die die genannte Vielzahl von Rollen drehend stützen, wobei eine Endstützanordnung das genannte Absenkrollenmittel daran montiert und das genannte Wendestangenmittel daran montiert aufweist, Mittel zum Seitwärtsverschieben der Rotationsachse der genannten Vielzahl von Rollen durch Drehen der genannten einen Endstützanordnung bezogen auf die andere Endstützanordnung, sodaß bewirkt wird, daß sich die genannte, sich über die genannte Vielzahl von Rollen bewegende geebnete Materialbahn aufgrund der seitlich verschobenen Rotationsachse der genannten Vielzahl von Rollen nach oben bewegt, um jedem Durchhängen der sich horizontal bewegenden, geebneten Materialbahn entgegenzuwirken.

2. Materialbahnhandhabungsvorrichtung nach Anspruch 1, worin das genannte Mittel zum Drehen ein oszillierendes Rotationsmittel ist, das die genannte Spindel durch den genannten vorherbestimmten Winkel von bis zu 360° dreht und die genannte Spindel dann durch den vorherbestimmten Winkel in eine entgegengesetzte Rotationsrichtung zurückdreht, wodurch periodisch bewirkt wird, daß die genannte geebnete Materialbahn über die genannten anderen Rollen wandert.

3. Materialbahnhandhabungsvorrichtung nach Anspruch 1 oder 2, die ein auf der genannten Spindel montiertes Absenkrollenantriebsmittel einschließt, um die genannte röhrenförmige Materialbahn in die genannte Spindel zu ziehen.

4. Materialbahnhandhabungsvorrichtung nach Anspruch 1, 2 oder 3, worin das genannte Wendestangenmittel im Inneren der genannten Spindel montiert ist.

5. Materialbahnhandhabungsvorrichtung nach Anspruch 1, das ein Kantenermittlungsmittel zum Überwachen der horizontalen Position der horizontal angeordneten und geebneten Materialbahn und zum Erzeugen eines Durchhängsignals einschließt, wenn die Kante der genanten horizontalen und geebneten Materialbahn sich außerhalb eines vorherbestimmten vertikalen Bereichs befindet, Mittel zum Steuern des seitlichen Verschiebens der genannten Rotationsachse der genannten Vielzahl von Rollen über das genannte Mittel zum seitlichen Verschieben, sodaß der genannten horizontalen und geebneten Materialbahn eine Aufwärtsbewegung verliehen wird, wodurch dem genannten Durchhängen automatisch entgegengewirkt wird.

6. Materialbahnhandhabungsvorrichtung nach Anspruch 1 oder 2, worin die genannte Vielzahl von Rollen Leit- bzw. Leerlaufrollen sind.

7. Materialbahnhandhabungsvorrichtung nach Anspruch 1, insbesondere eine Abnahmevorrichtung für geblasene Kunststoffröhren, die um 360° drehbar und um eine Röhrenmittellinie reversibel ist, umfassend eine rotierende Anordnung, die einschließt: zwei Zugrollen und eine Abdeckung bzw. Überdachung zum Ebnen der genannten Röhre, eine 45°-Wendestange, die den genannten Zugrollen auf einer zu den genannten Rollen parallelen Ebene folgt und zentral und tangential zur genannten Mittellinie angeordnet ist, mehrfache und im gleichen Abstand angeordnete Rollen, die die genannte Wendestange umgeben und in einem mit der genannten Mittellinie konzentrischen Umkreis- bzw. Umfangs-Muster montiert sind, wobei die Rotationsachse der genannten Rollen meist parallel zur genannten Mittellinie angeordnet ist, eine der genannten Rollen im wesentlichen in einer Linie mit der genannten Wendestange angeordnet ist; die genannte rotierende Anordnung mit Mitteln zum Verleihen einer oszillierenden Drehung an die genannte rotierende Anordnung um die genannte Mittellinie betrieben wird; eine stationäre Rolle, die in enger Nachbarschaft zum Kreis aus Rollen und prallel zur genannten Mittellinie angeordnet ist.

8. Vorrichtung nach Anspruch 7, worin die genannte geebnete Röhre eine Materialbahn ist und die Materialbahn nach dem Wandern über die Wendestange und das Äußere des Kreises aus Rollen durch die oszillierende Drehung der rotierenden Anordnung in Verbindung mit der stationären Rolle über die genannten Walzen aufgewickelt und abgewickelt wird.

9. Vorrichtung nach Anspruch 8, worin der Aufwickel- und Abwickelvorgang dadurch gekennzeichnet ist, daß eine Drehung der Rollen immer in die gleiche Richtung erfolgt, wenn die genannten Rollen die genannte Materialbahn berühren.

10. Vorrichtung nach Anspruch 7, 8 oder 9, worin ein Minimum von zwei Rollen verwendet wird, die außerhalb der und parallel zur genannten Mittellinie liegen und in einer Linie mit der genannten Wendestange sind.

11. Vorrichtung nach Anspruch 7, 8, 9 oder 10, bei der ein äußerer Kreis der genannten Rollen parallel zur genannten Mittellinie liegt und welche Rollen Leerlauf- bzw. Leitrollen oder angetriebene Rollen sind.

12. Vorrichtung nach einem der Ansprüche 7 bis 11, bei der der äußere Kreis von Rollen parallel zur genannten Mittellinie eine Beschichtung aus Gummi oder Elastomer mit einem hohen Reibungskoeffizienten aufweist.

13. Vorrichtung nach Anspruch 12, bei der die Achse der äußeren oszillierenden Rollen in einem Winkel bezogen auf die genannte Mittellinie voreingestellt ist, sodaß auf eine genannte Materilabahn eine Hebewirkung ausgeübt wird, wenn die genannte Materialbahn über die genannten Walzen geht, wodurch das Durchhängen der genannten Materialbahn zum Verschwinden gebracht wird.

14. Vorrichtung nach Anspruch 11, bei der die Achse der äußeren oszillierenden Rollen durch Mittel zum kontinuierlichen und automatischen Einstellen bezogen auf die genannte Mittellinie eingestellt wird, während die Vorrichtung in Betrieb ist, sodaß die genannten Rollen als eine Kantenführung für die genannte Materialbahn wirken.

## Revendications

1. Appareil de maniement de tissu pour aplatir et distribuer latéralement toute imperfection longitudinale dans un tissu flexible, tubulaire, en mouvement continu comprenant :
une broche tournante possédant une entrée acceptant ledit tissu tubulaire, ledit tissu tubulaire présentant lesdites imperfections longitudinales à une position constante circonférentielle, et émettant un tissu aplati dans lequel lesdites imperfections sont réparties latéralement à une poulie folle fixe, ladite broche comprenant :
un moyen formant galet de pincement pour aplatir ledit tissu tubulaire disposé à l'entrée de ladite broche;
un moyen formant barre tournante monté de façon coplanaire avec ledit tissu aplati lorsque ledit tissu sort dudit moyen formant galet de pincement, ledit moyen formant barre tournante étant destiné à faire tourner de manière coplanaire ledit tissu essentiellement de 90 degrés;
une pluralité de galets disposés circonférentiellement autour dudit moyen formant barre tournante dont les axes de rotation sont essentiellement parallèles à l'axe de rotation de ladite broche et sont alignés essentiellement latéralement audit tissu aplati, ledit tissu aplati passant toujours d'abord sur un premier galet de ladite pluralité de galets et passant périodiquement sur d'autres galets de ladite pluralité de galets le long d'une périphérie externe de ladite broche, qui est définie par une pluralité de poulies folles, à ladite poulie folle fixe; et
un moyen pour faire tourner ladite broche d'un angle prédéterminé de 360 degrés autour d'un axe dudit tissu tubulaire de sorte qu'une position relative de ladite imperfection relativement à une position définie sur ledit moyen formant barre tournante change en répartissant ainsi latéralement ladite imperfection le long d'une progression longitudinale dudit tissu aplati;
dans lequel ledit tissu tubulaire est tiré verticalement dans ladite broche via le moyen formant galet de pincement, ladite broche et l'axe de ladite pluralité de galets sont disposés verticalement, ladite broche comprend deux structures de support extrêmes qui supportent de façon rotative ladite pluralité de galets, une structure de support extrême présentant ledit moyen formant galet de pincement monté sur celle-ci et ledit moyen formant barre tournante monté sur celle-ci, des moyens pour incliner l'axe de rotation de ladite pluralité de galets en faisant tourner ladite structure de support extrême relativement à l'autre structure de support extrême de telle sorte que ledit tissu aplati passant sur ladite pluralité de galets est amené à se déplacer vers le haut dû à l'axe de rotation incliné de ladite pluralité de galets pour neutraliser ou contrebalancer tout affaissement ou fléchissement dans le tissu aplati se déplaçant horizontalement.

2. Appareil de maniement de tissu selon la revendication 1, dans lequel ledit moyen de rotation est constitué par un moyen de rotation oscillant qui fait tourner ladite broche suivant ledit angle prédéterminé allant jusqu'à 360 degrés et fait tourner ensuite dans le sens contraire ladite broche suivant ledit angle prédéterminé dans une direction de rotation opposée en amenant ainsi périodiquement ledit tissu aplati à se déplacer sur lesdits autres galets.

3. Appareil de maniement de tissu selon la revendication 1 ou la revendication 2, comprenant un moyen d'entraînement du galet de pincement monté sur ladite broche pour tirer ledit tissu tubulaire dans ladite broche.

4. Appareil de maniement de tissu selon la revendication 1, 2 ou 3, dans lequel ledit moyen formant barre tournante est monté dans l'intérieur de ladite broche.

5. Appareil de maniement de tissu selon la revendication 1, comprenant un moyen de détection de bord pour surveiller la position horizontale du tissu aplati et disposé horizontalement et pour produire un signal d'affaissement ou de fléchissement lorsque le bord dudit tissu horizontal et aplati se situe à l'extérieur d'une plage verticale prédéterminée, des moyens pour régler l'inclinaison dudit axe de rotation de ladite pluralité de galets via ledit moyen d'inclinaison de telle sorte qu'un mouvement ascendant est communiqué audit tissu horizontal et aplati en contrebalançant ainsi automatiquement ledit affaissement.

6. Appareil de maniement de tissu selon la revendication 1 ou 2, dans lequel ladite pluralité de galets sont des poulies folles.

7. Appareil de maniement de tissu selon la revendication 1, en particulier un appareil de retrait d'un tubage plastique soufflé, pouvant tourner de 360 degrés et réversible autour d'une ligne de centre de tubage, avec une structure tournante comprenant : deux galets de traction et un auvent pour aplatir ledit tubage, une barre tournante de 45 degrés suivant lesdits galets de traction sur un plan parallèle auxdits galets et localisé centralement et tangentiellement à ladite ligne de centre, des galets multiples et espacés régulièrement entourant ladite barre tournante et montés suivant un schéma circonférentiel de manière concentrique à ladite ligne de centre, l'axe de rotation desdits galets étant principalement parallèle à ladite ligne de centre, l'un desdits galets étant localisé essentiellement en alignement avec ladite barre tournante ; ladite structure tournante étant mis en fonctionnement par des moyens pour communiquer une rotation oscillante à ladite structure tournante autour de ladite ligne de centre; un galet stationnaire localisé très près du cercle de galets et parallèle à ladite ligne de centre.

8. Appareil selon la revendication 7, dans lequel le tubage aplati est un tissu et le tissu, après son passage sur la barre tournante et l'extérieur du cercle des galets, est enroulé et déroulé sur lesdits galets par la rotation oscillante de la structure tournante conjointement avec le galet stationnaire.

9. Appareil selon la revendication 8, dans lequel l'action d'enroulement et de déroulement est caractérisée par une rotation des galets qui se fait toujours dans la même direction lorsque lesdits galets sont en contact avec ledit tissu.

10. Appareil selon la revendication 7, 8 ou 9, dans lequel un minimum de deux galets sont utilisés qui sont extérieurs et parallèles à ladite ligne de centre et qui sont en alignement avec ladite barre tournante.

11. Appareil selon la revendication 7, 8, 9 ou 10, dans lequel un cercle externe desdits galets est parallèle à ladite ligne de centre et qui est constitué par des poulies folles ou des poulies menées.

12. Appareil selon l'une des revendications 7 à 11, dis lequel le cercle externe de galets parallèle à ladite ligne de centre présente un revêtement en caoutchouc ou en élastomère avec un coefficient de friction élevé.

13. Appareil selon la revendication 12, dans lequel l'axe des galets oscillants externes est prè-règlé suivant un angle relativement à ladite ligne de centre de telle sorte qu'un effet de soulèvement est produit sur ledit tissu lorsque ledit tissu passe sur lesdits galets en annulant ainsi l'affaissement dudit tissu.

14. Appareil selon la revendication 11, dans lequel l'axe des galets oscillants externes est réglé par des moyens de réglage continus et automatiques relativement à ladite ligne de centre tandis que l'appareil est en fonctionnement de sorte que lesdits galets agissent comme un élément de guidage de bord dudit tissu.
